# EUROPÄISCHE PATENTANMELDUNG

(11) **EP 4 098 715 A1**
(43) Veröffentlichungstag der Anmeldung: **07.12.2022**
(21) Anmeldenummer: 22176696.7
(22) Anmeldetag: 01.06.2022
(51) Int. Cl.: C09K 8/528, C09K 8/72

(54) **VERFAHREN ZUM FREIMACHEN EINER DURCH EIN ADSORBENS ZUGESETZTEN TIEFBOHRUNG**

(30) Priorität: 01.06.2021 DE 102021114229
(71) Anmelder: EnBW Energie Baden-Württemberg AG, 76131 Karlsruhe (DE)
(72) Erfinder: Kölbel, Thomas, 76228 Karlsruhe (DE); Kaymakci, Elif, 76337 Waldbronn (DE); Herrmann, Laura, 76227 Karlsruhe (DE); Graczyk-Zajac, Magdalena, 69126 Heidelberg (DE)
(74) Vertreter: DREISS Patentanwälte PartG mbB

(57) **Zusammenfassung**

Es wird ein Verfahren vorgeschlagen, um geologische Tiefbohrungen, die verstopft sind, durch die Zugabe einer Säure aus der Gruppe der Carbonsäuren und vinylogen Carbonsäuren wieder freigängig und aufnahmefähig für Flüssigkeit zu machen.

## Beschreibung

Die vorliegende Erfindung betrifft ein Verfahren zum Freimachen einer Tiefbohrung, die durch ein Manganoxid-Adsorbens zugesetzt bzw. verstopft ist.

Die Begriffe "Tiefbohrung" und "Brunnen" werden im Zusammenhang mit der Erfindung teilweise synonym gebraucht.

Aufgrund ihrer Vorzüge, wie z.B. einer hohen elektrischen Energiedichte, einer hohen Arbeitsspannung, einer langen zyklischen Lebensdauer, dem fehlenden Memory-Effekt usw., ist die wiederaufladbare Lithium-Ionen-Batterie (genauer gesagt: der Lithium-Ionen-Akkumulator) in Notebook-Computern, Mobiltelefonen und Elektroautos weit verbreitet. Die Nachfrage nach Lithium-Ionen-Batterien steigt unter anderem im Zuge der Elektromobilität stark an. Dementsprechend ist die Nachfrage nach Lithiumcarbonat sehr groß.

Derzeit werden vor allem zwei verschiedene Rohstoffquellen zur Herstellung von Lithiumsalzen verwendet, nämlich Lithiumerze und Sole. Der Begriff "Sole" umfasst im Zusammenhang mit der Erfindung jede wässrige Lösung, die Lithiumionen enthält. Insbesondere fallen Grund- und Tiefenwasser sowie Meerwasser bzw. die "Abfallprodukte" von Meerwasserentsalzungsanlagen unter den Begriff "Sole". Die Erfindung betrifft überwiegend Sole, die durch Tiefbohrungen erschlossen, an die Erdoberfläche gefördert, dort genutzt und anschließend wieder über eine weitere Tiefbohrung in den Untergrund zurückgeführt wird. Die thermische Nutzung des oftmals sehr heißen Tiefen-Wasser (mit einer Temperatur größer als 100°C) wird als Geothermie bezeichnet und ist die vielleicht bekannteste Nutzung von Tiefenwasser.

Allerdings enthalten die Sole bzw. das Tiefenwasser, das aus manchen Tiefbohrungen gefördert wird, verschiedene sehr wertvolle Rohstoffe (z. B. Lithiumionen), wenn auch in relativ geringer Konzentration. Um aus einer Sole, die nur wenige Lithiumionen enthält (typischerweise 10 bis 1000 mg/L), Lithiumsalze herstellen zu können, sollte deren Konzentration 15.000 ppm oder größer sein.

Ein etabliertes Verfahren zur Erhöhung der Lithium-IonenKonzentration der Sole auf ein Niveau, das für die Herstellung von Lithiumsalzen erforderlich ist, ist die Adsorption von Lithiumionen aus einer lithiumhaltigen wässrigen Lösung (Sole).

Die US 6 764 584 B2 und die nachveröffentlichte DE 10 2021 105 808 A1 der Anmelderin beschreiben solche Adsorptionsverfahren. Dabei wird eine lithiumhaltige wässrige Lösung in einer oder mehreren Adsorberkolonnen mit einem Manganoxid-Adsorbens in Kontakt gebracht, so dass zumindest Teile der in der wässrigen Lösung enthaltenen Lithiumionen an dem Adsorbens adsorbiert werden.

Anschließend wird die abgereicherte (d. h. weniger Lithium-Ionen enthaltende) Sole aus der Adsoberkolonne abgelassen und die an dem Adsorptionsmittel anhaftenden Lithium-Ionen mithilfe eines Desorptionsmittels (z. B. einem Gemisch aus Wasser und Salzsäure (HCl)) desorbiert.

Die abgereicherte (und im Falle einer thermischen Nutzung auch abgekühlte) Sole wird dann in eine weitere Tiefbohrung gefördert und über diese Tiefbohrung wieder in den Untergrund eingebracht, so dass der Wasserhaushalt im Untergrund nicht oder nur wenig gestört oder beeinträchtigt wird. Am Ende der Tiefbohrung hat der Untergrund teilweise sehr kleine bzw. schmale Poren, Risse und Spalte. Durch diese gelangt das Tiefenwasser wieder in den Untergrund bzw. wird von ihm aufgenommen.

Das Wiedereinbringen der Sole in den Untergrund nach der thermischen und/oder stofflichen Nutzung ist zumeist auch Bestandteil der von der zuständigen Behörde erteilten Genehmigung und steht nicht im Belieben des Betreibers. Anders ausgedrückt: Wenn das Tiefenwasser nicht wieder in den Untergrund zurückgefördert werden kann, muss der Betrieb der Anlage unterbrochen werden!

Aus der CN 103 272554 A und der nachveröffentlichten DE 10 2021 108 442 A1 der Anmelderin sind Verfahren zur Herstellung eines Lithium-Adsorptionsmittels (nachfolgend auch als "Adsorbens" bezeichnet) bekannt. Dieses Adsorbens liegt in Pulverform vor. Die Korngröße variiert vom µm- bis in den cm-Bereich. Partikel dieser Größenordnung sind geeignet, im Zuge von Havarien und sonstigen Verlusten zu Verstopfungen in Brunnen bzw. Tiefbohrungen zu führen. Hiervon kann der Brunnen / die Tiefbohrung grundsätzlich in jeder Tiefe betroffen sein, insbesondere aber im Bereich von Filtern. Beim Austritt der Sole aus dem Brunnen in das umgebende Gestein kann es zusätzlich zur Bildung von Verstopfungen im Bereich zwischen Filter und Bohrlochwand, aber auch im Bereich des Reservoirs (Porenraum und andere Hohlräume wie Klüfte, Karsthohlräume etc.) kommen. Diese Verstopfungen führen grundsätzlich zu einer reduzierten Leistung von Brunnen und auch des Reservoirs bis hin zum Totalverlust.

Die vorbekannten Adsorptionsverfahren funktionieren sehr gut und wirtschaftlich. Allerdings ist es nicht auszuschließen, dass durch einen technischen Defekt, menschliches Versagen oder aus anderen Gründen unbeabsichtigter Weise eine große Menge des Adsorbens in das abgereicherte Tiefenwasser und damit auch in den Untergrund gelangt. Dort setzt das Adsorbens die Risse und Spalten im Untergrund am Ende des Bohrlochs zu und verstopft diese. In Folge dessen verliert der Untergrund am unteren Ende des Bohrlochs die Fähigkeit das Tiefenwasser aufzunehmen. Im schlimmsten Fall muss deshalb der Betrieb der gesamten Anlage eingestellt werden.

Der Erfindung liegt die Aufgabe zugrunde, ein Verfahren bereitzustellen, mit dessen Hilfe das Verstopfen bzw. Zusetzen eines Bohrlochs, des Ringspalts zwischen Filter und Bohrungswand und auch des Reservoirs durch Adsorbens im Tiefenwasser verhindert und rückgängig gemacht werden kann.

Es hat sich bei Versuchen herausgestellt, dass Carbonsäure, Dicarbonsäure, Tricarbonsäure und vinyloge Carbonsäure (dazu gehören unter anderem Zitronensäure/Ascorbinsäure, aber auch Apfelsäure und Weinsäure), bzw. eine Säure aus der Gruppe der obengenannten Säuren oder eine Mischung daraus sehr gut geeignet sind, das Adsorbens, welches wegen einer Havarie bzw. eines Betriebsunfalls in die Tiefbohrung gelangt ist, mit einer dieser Säuren oder einem Gemisch dieser Säuren aufzulösen. Dadurch verstopft das Adsorbens die Spalten und Risse im Untergrund am unteren Ende der Tiefbohrung nicht, sondern wird gelöst.

Es kann dann zusammen mit einer der obengenannten Säuren und dem Tiefenwasser von dem porösen Untergrund aufgenommen werden und sich dort sehr großräumig verteilen.

Alternativ und in der Regel bevorzugt kann das gelöste Adsorbens zusammen mit der Säure aus Reservoir und Bohrung zurück an die Erdoberfläche zur schadlosen Entsorgung zurückgefördert werden. Nach einer definierten Einwirkzeit wird der Brunnen/die Tiefbohrung abgepumpt.

Durch das Abpumpen des gelösten Adsorbens' und der Säure aus Reservoir und Bohrung, gelangt dieses Flüssigkeitsgemisch nicht in den Untergrund, so dass unvorhergesehene chemische Reaktionen mit dem Fluid im Reservoir, die zu Ausfällungen führen können, sicher ausgeschlossen werden können.

Anders ausgedrückt: Die überraschend einfache erfindungsgemäße Lösung sieht vor, eine zugesetzte Tiefbohrung mit Hilfe einer der oben genannten Säuren oder einem Gemisch aus diesen Säuren wieder "freizumachen". Die Säure löst das Adsorbens auf und beseitigt dadurch die Blockade.

Es hat sich als besonders vorteilhaft erwiesen, Ascorbinsäure, Zitronensäure oder Zitronensäuremonohydrat einzusetzen. Diese Säuren sind kostengünstig, stehen in großen Mengen zur Verfügung und sind relativ einfach in der Handhabung. Sie kommen auch in der Natur vor und sind daher wenig umweltgefährdend. Außerdem verlangen sie keinen erhöhten Aufwand zur Gewährleistung des Arbeitsschutzes.

In der einer vorteilhaften Ausgestaltung des Verfahrens wird vor der Zugabe von einer oder mehreren Säuren aus der Gruppe der Carbonsäuren, Di- oder Tricarbonsäuren, vinyloge Carbonsäuren mindestens ein Teil der Sole aus der Tiefbohrung entfernt. Dadurch ist es einfach und sehr effektiv möglich, die Säure an den Ort der Verblockung oder der Verstopfung zu bringen.

Es ist alternativ auch möglich, in der Tiefbohrung eine Injektionssonde in jede gewünschte Tiefe und bis an das untere Ende der Tiefbohrung einzuführen. Dadurch kann die Säure oder das Gemisch an Säuren gezielt dort injiziert werden, wo sich das zu lösende Adsorbens befindet. In Folge dessen wird die Säure oder das Gemisch an Säuren gezielt in Kontakt mit dem dort befindlichen Adsorbens gebracht. Auf diese Weise wird die Auflösung des Adsorbens deutlich effektiver und wirkungsvoller.

Nachdem eine ausreichende Menge der erfindungsgemäßen Säure in der gewünschten Tiefe in die Tiefbohrung befördert wurde, kann die Injektions-Sonde wieder aus der Tiefbohrung abgezogen werden und der Betrieb der Tiefbohrung kann unverändert fortgeführt werden.

Außerdem kann die Sonde auch dazu genutzt werden, das gelöste Adsorbens und die Säure aus dem Brunnen/der Tiefbohrung abzupumpen und kontrolliert zu entsorgen. Diese Variante wird in der Regel bevorzugt.

In weiterer vorteilhafter Ausgestaltung kann die Ascorbinsäure, bzw. die Säure aus der Gruppe der Carbonsäuren, Di- oder Tricarbonsäuren, vinyloge Carbonsäuren oder von einer Mischung daraus zusätzlich zu dem in der Tiefbohrung herrschenden hydrostatischen Druck noch weiter unter Druck gesetzt werden. Dies kann beispielsweise dadurch erfolgen, dass das obere Ende der Tiefbohrung verschlossen wird und über eine Hydraulikpumpe, die in der Tiefbohrung befindliche Flüssigkeit unter Druck gesetzt wird. Dadurch wird gewissermaßen "mit Gewalt" die Säure zu dem Adsorbens gedrückt und das Ausspülen bzw. das Lösen der Blockade in den Rissen und Spalten des Untergrunds wird vereinfacht und beschleunigt. Dieses Verpressen des ganz oder teilweise gelösten Adsorbens ist vor allem dann eine Alternative, wenn das Adsorbens schon weit in das Reservoir/den Untergrund verfrachtet wurde und nicht mehr abgepumpt werden kann.

Das erfindungsgemäße Verfahren ist ganz besonders wirkungsvoll, wenn das Adsorbens ein Adsorptionsmittel zur Adsorption von Lithium ist und insbesondere, wenn es vom Manganoxidtyp ist.

Erfindungsgemäß wird auch die Verwendung einer Carbonsäure, einer Di-_ und Tricarbonsäure, einer vinylogen Carbonsäure zum Auflösen eines Lithium-Adsorbens und/oder eines Adsorbens vom Manganoxydtyp beansprucht.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination erfindungswesentlich sein.

Wasserfreie Zitronensäure (C6H8O7) und Zitronensäure-Monohydrat (C6H8O7 · H2O), das pro Molekül Zitronensäure ein Molekül Kristallwasser enthält, werden im Zusammenhang mit der Erfindung als Zitronensäure bezeichnet. Ascorbinsäure (C6H8O6) ist eine organische Verbindung, die im Zusammenhang mit der Erfindung als Ascorbinsäure bezeichnet wird.

Weitere Vorteile und vorteilhafte Ausgestaltungen der Erfindung sind der Zeichnung und deren Beschreibung entnehmbar.

### Zeichnung

Die einzige Figur zeigt eine schematische Darstellung von zwei Tiefbohrungen zur Gewinnung von lithiumhaltiger Sole.

### Beschreibung des Ausführungsbeispiels

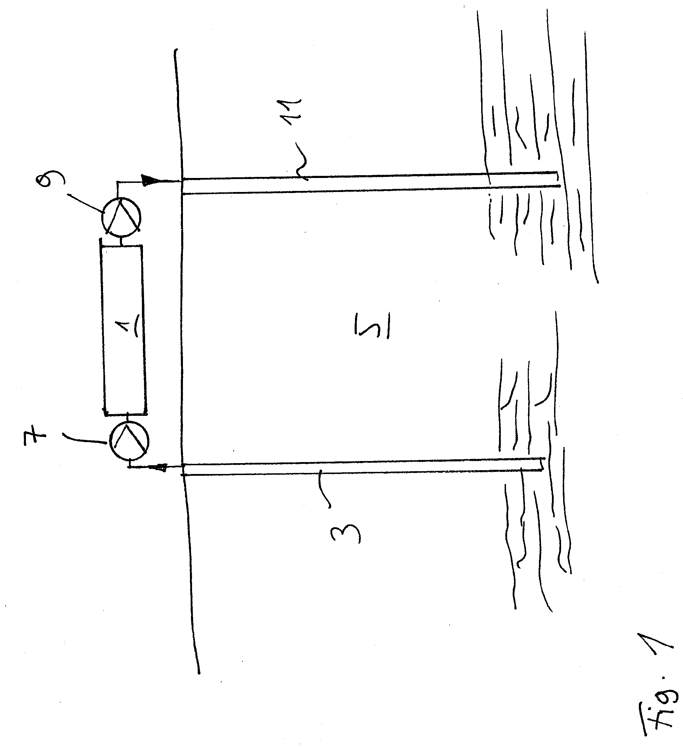

In der Figur 1 ist eine Anlage 1 zur Gewinnung von Lithiumionen aus einer lithiumhaltigen Sole bzw. aus lithiumhaltigem Tiefenwasser stark vereinfacht und nur als Block dargestellt. Der Anlage 1 vorgeschaltet ist eine erste Tiefbohrung 3, die teilweise mehrere tausend Meter in den Untergrund 5 getrieben wird. An dem unteren Ende der Tiefbohrung 3 ist der Untergrund 5 in der Regel porös oder klüftig und verkarstet. In vielen Fällen werden Risse oder Spalte gezielt eingebracht, indem nach dem Herstellen der ersten Tiefbohrung 3 und/oder der zweiten Tiefbohrung 11 eine Flüssigkeit unter Druck in die Tiefbohrung verpresst wird. Dadurch reißt der Untergrund 5 am Ende der Tiefbohrung 3 bzw. 11 auf und bildet die gewünschten Risse und Spalte ("hydraulische Stimulation"). Diese Risse und Spalte sind erwünscht, weil es das Abpumpen von Tiefenwasser (nicht dargestellt in der Figur 1) aus der ersten Tiefbohrung 3 aber auch die Reinjektion des Wassers in der zweiten Tiefbohrung 11 erlaubt, bzw. vereinfacht.

Das Tiefenwasser/die Sole in der ersten Tiefbohrung 3 wird von einer ersten Pumpe 7 gefördert und der Anlage 1 zugeführt. Die Erfindung ist nicht auf den oben genannten Verwendungszweck der Anlage 1 beschränkt. Es könnte in der Anlage 1 auch zusätzlich oder alternativ eine geothermische Nutzung des durch die erste Tiefbohrung 3 geförderten Tiefenwassers bzw. der lithiumhaltigen Sole erfolgen. Nachdem das Tiefenwasser bzw. die Sole in der Anlage 1 verarbeitet wurde, wird sie durch eine optionale zweite Pumpe 9 in eine zweite Tiefbohrung 11 gefördert.

Die zweite Tiefbohrung 11 dient dazu, das abgereicherte Tiefenwasser bzw. die abgereicherte Sole wieder in den Untergrund 5 einzubringen. In vielen Fällen sind die Längen der ersten Tiefbohrung 3 und der zweiten Tiefbohrung 11 etwa gleich.

Auch bei der zweiten Tiefbohrung 11 sollte der Untergrund an deren unteren Ende die möglichst porös, klüftig oder verkarstet sein, damit er die abgereicherte Sole aufnehmen kann.

Wenn der Untergrund nicht von Natur aus schon eine ausreichende Porosität bzw. Permeabilität und Transmissibilität, also Flüssigkeitsaufnahmefähigkeit, hat, kann er auch durch hydraulisches Verpressen mit Rissen und Spalten versehen werden, um die Flüssigkeitsaufnahmefähigkeit zu verbessern. Es liegt auf der Hand, dass diese Spalte und Risse relativ schmal sind, so dass sie durch Festkörper, wie beispielsweise ein Adsorbens, der z. B. aufgrund einer Betriebsstörung der Anlage 1 in die zweite Tiefbohrung 11 gelangt ist, zugesetzt werden können. Dann verringert sich die Flüssigkeitsaufnahmefähigkeit des Untergrunds negativ. Das kann entweder zu einem erhöhten Bedarf elektrischer Energie für die Pumpe 9 führen oder sogar dazu, dass der Durchfluss bzw. die Förderleistung der Pumpe 9 aufgrund des erhöhten Strömungswiderstands im Untergrund 5 so stark zurückgehen, dass die vorgeschaltete Anlage 1 nicht mehr wirtschaftlich oder überhaupt nicht mehr betrieben werden kann.

Erfindungsgemäß ist nun vorgesehen, im Falle einer solchen Blockade oder Zusetzung des Untergrunds oder der Tiefbohrung 11 eine Carbonsäure, eine Di- oder Tricarbonsäure, eine vinyloge Carbonsäure oder eine Säure aus der Gruppe der obengenannten Säuren oder eine Mischung daraus an das untere Ende der zweiten Tiefbohrung 11 bzw. eine durch Adsorbens verstopfte Stelle der der Tiefbohrung zu bringen. Es hat sich überraschenderweise herausgestellt, dass die genannten Säuren Adsorbens, insbesondere Adsorptionsmittel für Lithium bzw. Adsorbens vom Manganoxidtyp sehr gut auflösen.

Dadurch ist es möglich, ein Adsorbens aufzulösen, das sich in den Rissen und Spalten am unteren Ende der zweiten Tiefbohrung 11 oder in der Tiefbohrung 11 festgesetzt hat. Damit wird die Porosität, Klüftigkeit und die Karsthohlräume des Untergrunds 5 am unteren Ende der zweiten Tiefbohrung 11, aber auch die Durchgängigkeit der Tiefbohrung 11, wieder hergestellt, beziehungsweise eine negative Beeinträchtigung dieser Eigenschaften und damit auch der Aufnahmefähigkeit für Tiefenwasser oder andere Flüssigkeiten verhindert.

Eine weitere Variante besteht darin, eine (Injektions-)Sonde (nicht dargestellt) in die Tiefbohrung 11 abzulassen, bis das Ende der Sonde das untere Ende der Tiefbohrung 11 bzw. den Ort der Verstopfung erreicht hat. Dann wird durch die Sonde die Säure in die Tiefbohrung 11 gefördert und kann ohne Distributionsverluste direkt das dort vorhandene Adsorptionsmittel auflösen.

In der Regel wird nach erfolgter Auflösung des Adsorbens, dieses zusammen mit der Säure durch die Sonde wieder abgepumpt und einer Entsorgung zugeführt.

Des Weiteren ist es möglich, durch eine Druckerhöhung auf die Säure bzw. die in der zweiten Tiefbohrung 11 befindliche Flüssigkeit die Säure in die "verstopften" Spalte und Risse des Untergrunds einzupressen und dadurch die Auflösung des Adsorptionsmittels zu beschleunigen.

## Patentansprüche

1. Verfahren zum Freimachen einer durch ein Adsorbens zugesetzten Tiefbohrung, welches darin besteht eine Carbonsäure, eine Di- oder Tricarbonsäure, eine vinyloge Carbonsäure oder eine Säure aus der Gruppe der obengenannten Säuren oder eine Mischung aus diesen Säuren in die zugesetzte Tiefbohrung (11) einzubringen.

2. Verfahren nach Anspruch 1, **dadurch gekennzeichnet, dass** Ascorbinsäure (C₆H₈O₆), Zitronensäure (C₆H₈O₇) und/oder Zitronensäure-Monohydrat (C₆H₈O₇ · H₂O) eingesetzt wird.

3. Verfahren nach Anspruch 1 oder 2, **dadurch gekennzeichnet, dass** ein Teil der in der Tiefbohrung befindlichen Sole durch die Säure aus der Tiefbohrung (11) verdrängt wird.

4. Verfahren nach einem der vorhergehenden Ansprüche, **dadurch gekennzeichnet, dass** vor der Zugabe der Säure eine Sonde in die Tiefbohrung (11) eingeführt wird, und dass die Säure durch die Sonde in die gewünschte Tiefe der Tiefbohrung (11) befördert wird.

5. Verfahren nach einem der vorhergehenden Ansprüche, **dadurch gekennzeichnet, dass** nach erfolgter Auflösung des Adsorbens, die Säure und das aufgelöste Adsorbens aus der Tiefbohrung (11) abgepumpt werden.

6. Verfahren nach einem der vorhergehenden Ansprüche 1 bis 4, **dadurch gekennzeichnet, dass** die Säure zusätzlich zu dem in der Tiefbohrung (11) herrschenden hydrostatischen Druck unter Druck gesetzt wird.

7. Verfahren nach einem der vorhergehenden Ansprüche, **dadurch gekennzeichnet, dass** das Adsorbens ein Lithium-Adsorptionsmittel ist.

8. Verfahren nach einem der vorhergehenden Ansprüche, **dadurch gekennzeichnet, dass** das Adsorbens vom Manganoxidtyp ist.

9. Verwendung von einer Carbonsäure, einer vinylogen Carbonsäure und einer Di- und Tricarbonsäure zum Auflösen eines Lithium-Adsorbens' und/oder eines Adsorbens' vom Manganoxidtyp.
